# EUROPEAN PATENT SPECIFICATION

(11) **EP 1 450 609 B1**
(45) Date of publication and mention of the grant of the patent: **28.06.2006**
(21) Application number: 02787846.1
(22) Date of filing: 27.11.2002
(51) Int. Cl.: A01N 59/16, A01N 25/34

(54) **ANTIMICROBIAL COMPOSITE MATERIAL**
ANTIMIKROBIELLES VERBUNDMATERIAL
MATERIAU COMPOSITE ANTIMICROBIEN

(30) Priority: 03.12.2001 US 334594 P; 05.03.2002 EP 02004913; 31.05.2002 EP 02012030
(43) Date of publication of application: 01.09.2004
(60) Divisional application: 05103980.8
(73) Proprietor: Luisi & Clement GmbH, 42781 Haan (DE)
(72) Inventor: JIANG, Shangxin, Shanghai (CN); LUISI, Isabella, 42781 Haan (DE); CLEMENT, Sigrun, 52525 Heinsberg (DE)
(74) Representative: Helbing, Jörg
(86) International application number: PCT/EP2002/013362
(87) International publication number: WO 2003/047349

(56) References cited:
- EP-A- 0 456 439
- EP-A- 0 552 071
- DE-A- 4 126 461
- DE-A- 19 913 395
- FR-A- 2 793 386
- US-A- 4 018 870
- WOHRLE D ET AL: "MOLECULAR SIEVE ENCAPSULATED ORGANIC DYES AND METAL CHELATES" ADVANCED MATERIALS, VCH VERLAGSGESELLSCHAFT, WEINHEIM, DE, vol. 6, no. 11, 1 November 1994 (1994-11-01), pages 875-880, XP000478728 ISSN: 0935-9648
- DATABASE WPI Section Ch, Week 199228 Derwent Publications Ltd., London, GB; Class A23, AN 1992-229919 XP002230713 & JP 04 153318 A (DAIICHI KOGYO SEIYAKU CO LTD), 26 May 1992 (1992-05-26)

## Description

The present invention relates to a composite material comprising a microparticle support derived from inorganic particles, which has metallic ions and non-metallic cations grafted thereto, a process for producing said composite material and its use.

### Background of the Invention

There are numbers of inventions and developments in non-drug, anti-bacterial materials in the last decade. Some of these materials are applied onto the surface of appliances as metal-ion coatings. Others form a sharp micro-surface that cuts bacterial cells during contact. There are also some materials grafting metallic ions (e.g. Ag⁺, Cu²⁺, or Zn²⁺) onto fabric or particles to achieve anti-bacterial purposes. Hence FR 2 793 386 relates to the preparation of bactericidal compositions containing silver-, copper- or zinc- exchanged zeolites.

Composite materials comprising a microparticule (zeolite) and either cationic dyes such as phtalocyanine dyes or metal chelates have been described in DE 1 991 395. The inclusion of dyes (phtalayanines) or metal chelates as guests in a molecular sieve (zeolite) has been investigated in Advanced Materials, 1994, 6, n°11.

There are several problems associated with the existing non-drug, anti-bacterial materials, such as high manufacturing, storage and transportation costs. The existing materials use either metallic ion or non-metallic ion grafting process which does not provide efficient anti-bacterial effects.

Accordingly, there is a need for developing a new material that is relatively low-cost in manufacture, storage, transportation and post-disposition processes, and at the same time is highly efficient for applications.

### Summary of the Invention

The present invention relates to
(1) a composite material ("Composite of the Invention") comprising a microparticle support having metallic ions and non-metallic cations grafted to the surface of the support, wherein the microparticle support consists essentially of polymeric inorganic particles, (i.e. is an inorganic microparticle support);
(2) a method for producing the composite material according to (1) above which comprises grafting a metallic ion and/or the non-metallic cation to the surface of the organic or inorganic particles;
(3) a carpet, cloth, wiper fabric, rubber, filter, paint, polyshield, latex, glue or adhesive comprising the composite of (1) above;
(4) a polyurethane flexible foam containing the composite material of (1) above;
(5) a method for preparing the polyurethane flexible foam according to (4) above which comprises preparing a mixture out of the composite material and a polyurethane prepolymer or binder and polymerizing the mixture; and
(6) a pharmaceutical, veterinary, cosmetic or antibacterial composition comprising the composite of (1) above.

### Detailed Description of the Invention

In accordance with the present invention "grafting" refers to any kind of chemical interaction (e.g., covalent chemical bond, ionic interaction, non-ionic or hydrophobic interaction) between the particles and the metallic ions and non-metallic cations, respectively. With the inorganic particles "grafting" means in most cases - without being bound to any specific theory - salt formation between the negative charges on the surface of the particle and the metallic ions and the non-metallic cations.

According to the invention "grafting" does not mean placing the salt of a cation with a low molecular, non-polymeric organic or inorganic compound in a matrix of adhesive, e.g. in order to fix the cation to a polymer.

The wording "consists essentially of" according to the invention means a content of greater than 90%, preferably greater than 95%, and most preferably greater than 99% by weight.

In a preferred embodiment the inorganic particle is a microporous silicate, such as zeolite, iolite, and diatomite. The microporous silicate has a large amount of micropores which can adsorb silver (resulting in a silver-zeolite complex), low-cost silver series substances (ions), such as copper ions or zinc ions, and the non-metallic cations, such as cationic dyes, through cationic interchange. The resulting composite has broad-spectrum, anti-bacterial and rot resistance effects without changing the basic properties of the support. It can be used on electrical home appliance plastics, plastic films, building coatings, ceramics, rubber items, etc.

The present invention also embraces composite materials containing both, inorganic and organic particles as microparticle support.

The metallic ions are silver series ions including, but not limited to, silver ions (Ag⁺), copper ions (Cu²⁺) and zinc ions (Zn²⁺). The above ions may be used separately or as a mixture.

The non-metallic cation preferably is a nitrogen containing compound having a positive charge can be any antibacterial aliphatic or aromatic amines or ammonium compounds. Such cations include, but are not limited to, saturated or unsaturated protonated heterocycles capable of being protonated or having at least one positive charge (per se) containing at least one nitrogen atom, e.g. saturated heterocycles (such as pyrrolidine, imidazolidine, piperidine, piperazine, azepane, azepine, morpholine, DABCO (1,4-diazabicyclo[2.2.2]octane), etc.) and their derivatives (such as N-methylmorpholine, etc.), unsaturated heterocycles having at least one double bond or being heteroaromatic (such as DBN (1,5-di-azabicylco[4.3.0]non-5-ene), DBU (1,8-diazabicyclo[5.4.0]undec-7-ene), imidazole, triazole, pyridine, bipyridine, pyrazine, pyrimidine, triazine, tetrazine, etc.) and their derivatives (such as substituted heterocycles (e.g. lutidine, collidine, etc.) or amino-substituted heterocycles (e.g. DMAP (4-N,N-dimethylaminopyridine), etc.), benzocondensed heteroaromatics (such as quinoline, isoquinoline, acridine, phenazine, etc.) and their derivatives, ammonium, mono-, di-, tri-alkyl-(or aryl-)amines (capable of being protonated) (such as butylamine, dibutylamine, trimethylamine, triethylamine, tripropylamine, tirbutylamine, N,N-diisopropylethylamine, benzyl-N,N-diethylamine, benzyl-N,N-dipropylamine, benzyl-N,N-dibutylamine, etc.), tetra-alkyl-(or aryl-)ammonium (such as tetraethylammonium, tetrapropylammonium, tetrabutylammonium, benzyl-N,N,N-triethylammonium, bezyl-N,N,N-tripropylammonium, benzyl-N,N,N-tributylammonium, dibenzyl-N,N-diethylammonium, etc.) and their derivatives, cationic dyes such as e.g. basic green, cationic brilliant blue, methine dyes, enamine dyes, styryl dyes, cyanine dyes, mono- and diazadimethine dyes, diphenylmethane and triphenylmethane dyes, xanthene dyes, azine dyes, azo dyes, anthraquinone dyes, phthalocyanine dyes, perinone dyes, naphthalimide dyes, quinophthalone dyes, neutrocyanine dyes, nitro dyes, etc. Particularly preferred non-metallic cations are the above-mentioned cationic dyes, in particular basic green, cationic brilliant blue, methane dyes and triptylmethane dyes, among which basic green and cationic brilliant blue are most preferred.

The composite of of the invention has antibacterial properties, is mold-resistant and is in solid form and generally in a powder form. The preferred powder size is 200 to 50 mesh. The color of the composite appears different depending on the dyes added during the manufacturing process. The color can be green, yellow, blue, black, red, etc.

The "microparticle support" according to the invention is a powder having a particle size of 500 to 10 mesh, preferably 200 to 50 mesh.

It is believed that the composite has an anti-bacterial function through incorporating micro-size, micro particle support of poly-microporous, non-metallic mineral (silicate) with copper or zinc ion and cationic dyes. The composite can have long-term, broad-spectrum, anti-bacterial and mold-resistant effect. The composite can be used to make anti-bacterial and mold-resistant plastics, ceramics, building coatings, rubber items, etc. It can also be used in textiles. It has a good anti-bacterial effect and broad effective spectrum. The material is non-toxic, easy to make and easy to maneuver.

One preferred embodiment of the invention is to choose silver-series substance, such as copper and zinc adsorb the silver series substance to the micro-sized support which can bind organic anti-bacterial groups, and graft organic anti-bacterial groups to the support to have a good anti-bacterial and mold-resistance effect.

For the composite material according to the invention to have antibacterial properties and to be mold-resistent it is essential that the content of the non-metallic cation is not too small, i.e. the non-metallic cation is present neither in trace amounts nor as an impurity (e.g. resulting from the manufacture of the microparticle support). According to the invention a trace amount or impurity of non-metallic cation is defined as a content of non-metallic cation being less than 0.1% by weight of the composite material and/or is defined as the non-metallic cations being present in the composite material or the microparticle support in a weight percentage ratio of non-metallic cations: metallic ions being smaller than 1.0 : 20.0 (i.e. the content of non-metallic cations is less than 5% by weight of the content of metallic ions).

Therefore, the content of the non-metallic cation according to the invention is defined as follows: The non-metallic cations are present in the composite material or the microparticle support in a weight percentage ratio of non-metallic cations : metallic cations not being smaller than 1.0 : 20.0 and/or the context of non-metallic cations is not less than 5% by weight of the content of metallic ions.

In a preferred embodiment of the invention, the weight percentage ratios among copper ion, zinc ion, porous silicate and cationic dyes are as follows: copper and zinc ions : microparticle support (e.g. porous silicate) : cationic dyes are (20~40) : (1.0~2.0) : (0.1~0.3).

Embodiment (2) of the invention relates to a method of producing the composite which includes grafting the metallic ion and/or the non-metallic cation to the copolymer. In particular, the process for preparing the composite is as follows:
1) Preparation of a proper amount of copper or zinc salt in a ratio indicated previously;
2) Addition of 20 to 40 ml of ammoniacal liquor (concentration 26-27%) at room temperature and mixing with the salt to obtain a liquid mixture with a concentration of 1 g in 1000 to 1500 ml water;
3) Stirring the mixture for 30 to 60 minutes and putting it aside for further use;
4) Selecting a proper amount of silicate (diatomite or iolite, the particle size corresponding to a mesh value of ≥ 80 mesh) at the ratio indicated previously;
5) Heating the silicate at 90°C to 100°C for 2 to 3 hours;
6) Adding the heated silicate to the mixture and stirring for 2 hours to obtain a reaction mixture;
7) Adding cationic dyes to the reaction mixture at the ratio indicated previously and stirring the cationic mixture for 30 to 60 minutes at 80°C to 90°C; and
8) Incubating the cationic mixture at 85 ± 2°C for 30 to 60 minutes, then filtering, washing, and baking the cationic mixture to obtain the composite as a powder.

In a preferred embodiment of the above process, during the production of the composite, a Cationic Brilliant Blue Dye is added as an additive.

In another preferred embodiment of the invention, the composite is parent particles that are composed of anti-bacterial agents, such as zinc sulfate, zinc oxide, silver nitrate, combined with polyethylene and ethylene-vinyl acetate copolymer. The process is complicated because it is confined by the fact that zeolite and water have a poor co-solubilization and a poor compatibility. The zeolite adsorption of silver-series substances is described in U.S. Patent No. 5,900,258. China Patent No. 94118576.1 provides a method that treat the composite of plant stem from rush- family chemically and physically to firmly incorporate the micro-size silver particle onto the surface of the support. That method uses a composite of a herbaceous stem so that it is not applicable in a high-temperature resistance environment, especially in ceramics. Both use silver as the sole anti-bacterial agent, which results in high production costs.

Another preferred embodiment of the invention relates to an anti-bacterial and mold-resistance composite that is a microporous non-metallic silicate with copper ions or zinc ions on the silicate surface and in its micropores. The silicate most preferably is a diatomite or an iolite such as the one obtainable from Hongqin Aotu Company, Ltd., Jiang Su province, China.

This invention overcomes the shortcomings of existing technology as follows: Provided is a superior micro-size, physical, anti-bacterial, and mold resistance composite and its manufacturing methods. This micro-size, physical, anti-bacterial, and mold resistance composite can be used to make an anti-bacterial and mold resistant carpet, cloth, wiper, fabric, clothing, underwear, rubber, filter, paint, polyshield, latex, glue or adhesive as well as anti-bacterial and mold-resistant plastics, ceramics, building coatings, rubber items and the like. It can also be used as a constituent of fibers and textile.

Compared to the existing techniques, the present invention discloses a low production cost and simple procedure. The invention further discloses a composite that has good anti-bacterial effect, a broad anti-bacterial spectrum. The composite has a prominent killing effect on pathogenic bacteria and fungi, e.g. pyro*genic cocci* (Streptococcus such as *Streptococcus pyrogenes, Streptococcus pneumoniae, and β-hemolysing Streptococcus, Staphylococcus aureus, Meningococcus, Neisseria gonorrhoea* and the like), *Enterobacteriaceae* (such as *Escherichia Coli, Schmitz's bacillus, Salmonella typhi, Salmonella paratyphi, Salmonella typhimurium, Salmonella enteritidis, Bacterium cholerae suis, Morgan's bacillus, Bacillus pneumonia, Pseudomonas aeruginosa* and the like), *Pathogenic fungi* (such as *Candida albicans, Crytococcus neoformans, Trichophyton rubrum, Trichophyton rosaceum, Microsporum gypseum, thread fungus* and the like), etc.

The composite according to the invention is non-toxic environmental-safe material. There are no special storage and disposal requirements for the composite. The end products of the composite may require different handling based on the different materials that the composite is mixed with. In most cases, said materials are all EPA or FDA registered materials and the mixing procedures comply with EPA regulations.

In accordance with embodiments (3) and (4) the composite can be used in carpet, cloth, rubber, filter, paint, poly shield, latex, glue, adhesive, and can be incorporated into PUR flexible foams. The PUR foams obtained possess excellent antibacterial activity and can be used in hospital and sanitary applications.

The process technology for the preparation of particle foams has reached a high level of development. Therefore, in principle the scope for varying the raw materials which can be employed is very large. In addition to the classical utilization of pure PUR flexible foam scraps, textile scraps, scraps from compact plastics, microcellular polyurethanes and thermoplastic foams can also be used.

However, as in any other production, one essential precondition to the preparation of high quality products having well-defined property profiles is the use of starting materials which are as homogeneous as possible. PUR flake compound foams, such as the so-called REBOND systems, which meet these requirements, are prepared from the wide variety of production scraps obtained in the PUR block foam production and processing.

REBOND systems are prepared from selected PUR scraps. The production scraps from the preparation of block foams or molded parts are comminuted to a defined size using commercially available cutting mills. Depending on the intended product properties, flakes having a diameter of from 1 mm to 30 mm are produced.

To ensure the exactly defined property profiles of the REBOND systems, the various types of flexible foam (ether, ester, Rubex block foam and molded foam) are pretreated separately. In case extensive in-company logistics is available, it is also possible to sort according to the properties of the starting foam, such as density of foam or resistance to compression.

According to the requirements for the intended end formulation, various types of flakes are mixed in the mass ratios required, and binder systems which are particularly optimized for the individual application are added. The polyurethane prepolymers employed do wet the foam flake in an optimum manner and ensure homogeneous distribution in the matter being mixed.

The mixture prepared accordingly is employed both for the preparation of block products and in the production of molded parts. The molding process, in principle, is similar in principle to block preparation and therefore essentially can be transferred. The flakes wetted with PUR binder are charged by conveying systems into block molds having a base area of up to about 1.20 m * 2.40 m, followed by two-dimensional condensing. The filling height depends on the product properties desired.

The actual reaction is effected by blowing saturated steam of 110-120 °C into the mold and is completed after 10 to 20 minutes. In rare cases, the reaction mixture is preheated with hot air. After several days of drying in an intermediate store, the demolded blocks can be processed by the conventional techniques known from PUR block foam processing. The standard assortment comprises rectangular blanks, contour blanks, profile sheets and sliced products.

The capability of employing defined and selected PUR scraps as the raw material and, in addition, a wide variety of additives for the purposeful control of additional properties in the preparation of REBOND systems offers a large number of product-specific factors for influencing product properties.

It has moreover been found that the composite of the invention can be utilized as an agent for treatment of itches, cuts and minor wounds and for the treatment of prevention and alleviation of skin diseases of humans and animals. The agent is preferably in form of a powder mixture containing the composite of the invention. This powder mixture can directly be applied to the skin (wound) or can be applied via a suitable carrier material (i.e., a cloth or fabric). The composite of the invention may also be comprised in pharmaceutical compositions suitable for oral administration.

The agent is also suitable to stabilize perishable products such as cosmetics, process aids, etc.

Finally, the composite of the invention is also suitable for preparing inactivated bacterial compositions, said compositions being suitable as pharmaceuticals, supplements etc. The obtained bacterial composition may contain the composite of the invention or may be free of it.

The followings examples illustrate the present invention, however, they are not to be construed as limiting the invention:

### Examples

The chemicals listed below were purchased from Weifang No. 3 Industrial chemicals, Shanghai Pudong Chemical and Material Supply and from Guangxi Province Nanning Mineral Products. The iolite and diatomite was purchased from Hongqin Aotu (mineral stone) Company, Ltd., Jiang Su Province, China.

### Example 1: Iolite as support

Copper sulfate (0.2 g) was dissolved in water (500 ml). Ammoniacal liquor (26 to 28%; 6 ml) was added, and the mixture obtained was stirred for 30 minutes to give a blue copper liquor. Iolite (90 mesh; 10 g) was baked at 100°C for 2 hours before it was added to the copper liquor to furnish a reaction mixture. The reaction mixture was stirred for 2 hours. Then Cationic Brilliant Blue (0.001 g) was added to the reaction mixture, which was stirred until the temperature reached 80°C to 90°C. The mixture was kept at 85 ± 2°C for 30 minutes, then filtered, washed and baked to obtain a bluish green powder.

### Example 2: Iolite as support

Zinc sulfate (0.26 g) was dissolved in water (800 ml). Ammoniacal liquor (26 to 28%; 6 ml) was added, and the mixture obtained was stirred for 30 minutes. Iolite (800 mesh; 20 g) was baked at 100°C for 2 hours before it was added to the preceding solution. The mixture obtained was stirred for 2 hours to give a reaction mixture. Cationic Brilliant Blue (0.0016 g) was added to the reaction mixture, which was stirred until the temperature reached 80°C to 90°C. The mixture was kept at 85 ± 2°C for 30 minutes, filtered, washed and baked to furnish a bluish green powder.

### Example 3: Diatomite as support

Zinc sulfate (0.2 g) was dissolved in water (600 ml). Ammoniacal liquor (26 to 28%; 8 ml) was added, and the mixture obtained stirred for 30 seconds. Diatomite (90 mesh; 25 g) was baked at 100°C for 2 hours before it was added to the mixture, which was stirred for 2 hours to give a reaction mixture. Cationic Brilliant Blue (0.0015 g) was added to the reaction mixture, which was stirred until the temperature reached 80°C to 90°C. The reaction mixture was kept at 85 ± 2°C for 30 minutes, filtered, washed and baked to obtain a bluish green powder.

### Example 4: Diatomite as Support

Zinc sulfate (0.3 g) was dissolved in water (500 ml). Ammoniacal liquor (26 to 28%; 8 ml) was added, and the mixture obtained stirred for 30 minutes to give a blue copper liquor. Diatomite (120 mesh; 20 g) was baked at 100°C for 2 hours before it was added to the mixture, which was stirred for 2 hours to furnish a reaction mixture. Cationic Brilliant Blue (0.0015 g) was added to the reaction mixture, which was stirred until the temperature reached 80°C to 90°C. The mixture was kept at 85 ± 2°C for 30 minutes, filtered, washed and baked to obtain a bluish green powder.

### Example 5: Large Scale with Iolite as Support

### 1. Preparation:

The raw material came in containers of different size each time. A sample was taken from each raw material of each order. The content of copper sulfate (grade II or higher), iolite (powder, industrial grade) and basic green dye (powder, industrial grade) was determined. Each sample was divided into two packages. One package was stored for future reference, the other package was tested according to the respective manufacturer specification sheet. In case the specification was not met it was immediately reported to the supervisor. Two workers wearing gloves and a face mask weighted and packed each raw material as follows:
a. Tap water 100 liter ± 10% (one container)
b. Iolite powder 100 kg ± 10% (one container)
c. Copper sulfate 10 kg ± 1% (one container)
d. Sodium hydrogensulfate 5 kg ± 5% (one container)
e. Basic green dye 4 g ± 1% (one container).

All containers had to be sealed for purity and to be cleaned if not being used for more than one day or being used for more than one week. All containers had to be labelled and marked. The QC sheet had to be signed for each preparation.

### 2. First baking:

All working conditions had to be complied with; once the compound was mixed, it was not allowed to reuse it once it was over the indicated standby time.
Iolite (100 kg) was poured into a container (container A), mixing was started, and water (1 I at a time) was added up to a total of 100 I. The mixture obtained was stirred at room temperature (10 to 25°C) for 30 to 40 min. Any bulky deposit at the bottom of the mixture had to be avoided.

A forklift was used to place the container (container A) into an oven (oven A). The oven temperature was set to 50°C and observed. The mixture was stirred at 30 rpm.

### 3. Second baking:

Once the mixture A in oven A reached 45-55°C, the forklift was used to remove container A from oven A. Copper sulfate (10 kg) was poured into mixture A. The mixture obtained was called mixture B. Container A was put back into oven A.
The temperature was set to 60°C and observed. When a temperature of 60°C was reached, the time was set to 30 minutes. The temperature was kept at 60°C for 30 min. Mixture B was stirred at 20 rpm.

### 4. Third baking:

Once mixture B in oven A was baked for 30 minutes, the forklift was used to remove container A from oven A. Sodium hydrogensulfate (5 kg) was poured into container A and the mixture obtained was called mixture C. Mixture C was not dry as powder at this time. Container A was put back into oven A.
The temperature was set to 70°C and observed; when this temperature was reached, the time was set to 30 min. The temperature was kept at 70°C for 30 min. Stirring was kept at 10 rpm.

### 5. Fourth baking:

Once the mixture C in oven A had been baked for 30 min, the forklift was used to remove container A from oven A. Basic green dye powder (4 g) was poured evenly into container A, and the mixture obtained was called mixture D. Mixture D was dry as powder at this stage. Container A was put into another oven (oven B). Oven A was ready immediately for use for the next batch.
The temperature was set to 80°C and mixture D was stirred for 30 min at 5 rpm.

### 6. Final baking:

Once mixture D in oven B had been baked for 30 min, the temperature of oven B was set to 95°C.
The temperature was kept at 95°C and mixture D was stirred for another 30 min at 5 rpm.

### 7. Filtering:

The fork lift was used to remove container A from oven B. Oven B needed to be cooled to below 80°C before the next run. By now the mixture in container A had an even looking color and was called compound E. Compound E was allowed to cool down until it was safe to handle.
The fork lift was used to lift container A to the conveyor line entrance. One or two workers loaded compound E onto the conveyor line channel. Compound E cooled to room temperature whilst on the conveyor line and before entering the filter. More than one filter was used in order to speed up the process. The final filter was selected according to the mesh size requirement (currently mesh 200 is required). The worker had to wear a face mask during filtering. The filtered compound was a powder called powder F.

### 8. Wash and dry:

Powder F will travel into a contained section of convey line. One worker with mask and gloves will flat powder F on the bottom of the convey line. Use steam water to wash away any foreign particles and dust off the powder F. Once powder F was washed, it was stored into a shallow container (container B) for air dry. A filter mesh (200) is recommended as the cover of container B. Several container Bs will take one load of container A.

### 9. Packaging:

After packaging the air dried powder F was called end product G (GCM powder), from which a sample was taken. Then end product G was filled into fiber bags, which were sealed and placed in metal barrels. Once the antibacterial report showed OK, the barrels were sealed. Each barrel contained net 30 kg GCM. 10. Antibacterial test on end products of GCM:
For each batch (about 10 metric ton of GCM), at least two samples had to be taken to the testing room, one at the beginning of the batch and one at the end.
The AATCC 1971 or 1981 method was used to test the samples. If the samples did not show an antibacterial halo (method 1971) or at least 90% antibacterial rate of 1981, the GCM of the related batch was discarded.

### Example 6: Test Study an Anti-Mites Pillow on Mites-related Allergies

### Test group:

45 volunteered patients with allergic asthmatic and allergic rhinitis disorder. Man 27, woman 18; Age 5-37, average age 39. Symptom history 2-40 years, symptom level light or medium. The patients showed a variety of allergic symptoms, such as nose itching, sternutation, rihinostegnosis (nose clog), eye itching and congestion, cough, chest asphyxia, roaring.

### Material:

### Anti-mites pillow, containing fibres with composite of the invention. Test method:

Each patient used an Elvon pillow replacing their own pillow (no towel on top of the pillowcase). One pillow per person, in a period of one month, record kept every 7 days in each symptom group.

### Test record:

| SYMPTOMS | Before | After | Effectiveness |
|---|---|---|---|
| Nose itching | 40 | 5 | 87.5% |
| Sternutation | 41 | 3 | 92.6% |
| Rhinostegnosis (nose clog) | 37 | 15 | 40.5% |
| Eye itching & congestion | 8 | 1 | 87.5% |
| Cough | 4 | 3 | 25% |
| Chest asphyxia | 2 | 0 | 100% |
| Roaring | 19 | 9 | 52.6% |

### Conclusion:

After 45 patients used the anti-mites for one month, the test result was as follows: The Elvon Physical Anti-Mites Pillow showed more than 80% effectiveness or improvement on symptoms like allergic asthma, allergic rhinitis, sternutation, nose itching, eye itching and congestion, chest asphyxia. Also, it helped to reduce the laryngismus caused by asthma, and then gave asthmatic patients a better sleep. The physical anti-mites pillow showed the sound and proved result of anti-mites features without any bad side effects.

### Example 7: Halo Test

Test Method:
1. The composite of Example 1 was mixed with Roberts adhesive in 0.1% formula (1000 ppm), and the mixture obtained was applied to the back side of two carpet samples.
2. After drying (approx. 24 hours), a round shaped piece (1 cm in diameter) was cut from each carpet sample and placed in a cultured agar plate. Two cultured agar plates were used in this test. One was cultured with Candida albicans, the other one was cultured with Bacillus subtilis.
3. After inoculation for 18 hours at 37°C, the halo circle, which was the area free of bacteria, was measured and its size recorded.

### Test results:

| Samples | Halo Circle Measurement |
|---|---|
| Loop carpet in Candida albicans agar plate | 2-3 mm |
| Felt carpet in Bacillus subtilis agar plate | 3-4 mm |

### Summary:

The composite of the invention and Robert adhesive mixture using 0.1% formula (1000 ppm) has the ability to prevent the bacteria from growing or passing through the carpet to which it is applied.

## Claims

1. A composite material comprising a microparticle support consisting essentially of polymeric inorganic particles having metallic ions and non-metallic cations grafted to the surface of the support, wherein the weight percentage ratio of non-metallic cation : metallic ion is not smaller than 1.0 : 20.0.

2. The composite material of claim 1, wherein the inorganic partides are a porous silicate, preferably an lolite or a diatomite.

3. The composite material according to claim 1 or 2, wherein
(i) the metallic ion is a silver-series ion, preferably is selected from copper, zinc and silver, and/or
(ii) the non-metallic ion is a nitrogen containing compound having at least one positive charge, preferably is a cationic dye and most preferably is selected from Basic Green and Cationic Brilliant Blue.

4. The composite material according to any one of claims 1 to 3, wherein the metallic ion is a copper ion or a zinc ion attached to the surface of a microporous silicate.

5. The composite material according to any one of claims 1 to 4, wherein the weight percentage ratio of the microparticle support : metallic ions : non metallic cations is (20 to 40) : (1.0 to 2.0) : (0.1 to 0.3).

6. The composite material according to any one of claims 1 to 5, which has a particle diameter of 74 to 297 µm (200 to 50 mesh).

7. A method for producing the composite material according to any one of claims 1 to 6, which comprises grafting a metallic ion and/or the non-metallic cation to the surface of the inorganic particles.

8. The method of claim 7 for preparing the composite material of claim 3, which comprises the steps of:
(a) preparing a proper amount of a metallic salt at a predetermined ratio;
(b) adding 20 to 40 ml of 26-27% ammoniacal liquor at room temperature;
(c) mixing the ammoniacal liquor with the metallic salt to obtain a liquid mixture with a concentration of 1 g in 1000 to 1500 ml water;
(d) Stirring the mixture for 30 to 60 minutes and putting it aside for further use;
(e) selecting a proper amount of a silicate (diatomite or iolite, the particle size corresponding to a mesh value of ≥ 80 mesh) at the predetermined ratio;
(f) heating the silicate at 90°C to 100°C for 2 to 3 hours;
(g) adding the heated silicate to the mixture and stirring for 2 hours to obtain a reaction mixture;
(h) adding cationic dyes to the reaction mixture at the predetermined ratio to obtain a cationic mixture;
(i) stirring the cationic mixture for 30 to 60 minutes at 80°C to 90°C;
(j) incubating the cationic mixture at 85 ± 2°C for 30 to 60 minutes,
(k) filtering the cationic mixture;
(I) washing the cationic mixture; and
(m) baking the cationic mixture to obtain the composite as a powder.

9. A carpet, cloth, wiper, fabric, rubber, filter, paint, polyshield, latex, glue or adhesive comprising the composite of claims 1 to 6.

10. A polyurethane flexible foam containing the composite material of claims 1 to 6.

11. The polyurethane flexible foam according to claim 10, which is suitable as a mattress or sanitary mat.

12. A method for preparing the polyurethane flexible foam according to claim 10 or 11, which comprises preparing a mixture out of the composite material and a polyurethane prepolymer or binder and polymerizing the mixture.

13. A pharmaceutical, veterinary, cosmetic or antibacterial composition comprising the composite of claims 1 to 6.

14. Use of the composite material according to any one of claims 1 to 6 for reducing or the prevention of the accumulation of bacteria and/or mold and/or for reducing or the prevention of rotting.

## Patentansprüche

1. Verbundmaterial, das einen Mikroteilchenträger umfasst, der im Wesentlichen aus polymeren anorganischen Teilchen besteht, wobei Metallionen und Nichtmetallkationen an die Oberfläche des Trägers gebunden sind, wobei das Gewichtsprozentverhältnis von Nichtmetallkation : Metallion nicht kleiner als 1,0 : 20,0 ist.

2. Verbundmaterial gemäß Anspruch 1, wobei es sich bei den anorganischen Teilchen um ein poröses Silicat, vorzugsweise Cordierit oder Diatomit, handelt.

3. Verbundmaterial gemäß Anspruch 1 oder 2, wobei:
(i) das Metallion ein Ion der Silberreihe ist, das vorzugsweise aus Kupfer, Zink und Silber ausgewählt ist; und/oder
(ii) das Nichtmetallion eine stickstoffhaltige Verbindung ist, die wenigstens eine positive Ladung aufweist, vorzugsweise ein kationischer Farbstoff ist und am meisten bevorzugt aus Malachitgrün und kationischem Brillantblau ausgewählt ist.

4. Verbundmaterial gemäß einem der Ansprüche 1 bis 3, wobei das Metallion ein Kupferion oder Zinkion ist, das an die Oberfläche eines mikroporösen Silicats gebunden ist.

5. Verbundmaterial gemäß einem der Ansprüche 1 bis 4, wobei das Gewichtsprozentverhältnis von Mikroteilchenträger : Metallionen : Nichtmetallkationen (20 bis 40) : (1,0 bis 2,0) : (0,1 bis 0,3) beträgt.

6. Verbundmaterial gemäß einem der Ansprüche 1 bis 5, das einen Teilchendurchmesser von 74 bis 297 µm (200 bis 50 mesh) hat.

7. Verfahren zur Herstellung des Verbundmaterials gemäß einem der Ansprüche 1 bis 6, das das Binden eines Metallions und/oder des Nichtmetallkations an die Oberfläche der anorganischen Teilchen umfasst.

8. Verfahren gemäß Anspruch 7 zur Herstellung des Verbundmaterials von Anspruch 3, das die folgenden Schritte umfasst:
(a) Herstellen einer geeigneten Menge eines Metallsalzes in einem vorbestimmten Verhältnis;
(b) Hinzufügen von 20 bis 40 ml 26-27%iges Ammoniakwasser bei Raumtemperatur;
(c) Mischen des Ammoniakwassers mit dem Metallsalz, so dass man ein flüssiges Gemisch mit einer Konzentration von 1 g in 1000 bis 1500 ml Wasser erhält;
(d) Rühren des Gemischs während 30 bis 60 Minuten und Beiseitestellen zur weiteren Verwendung;
(e) Auswählen einer geeigneten Menge eines Silicats (Diatomit oder Cordierit, wobei die Teilchengröße einem Meshwert von ≥ 80 mesh entspricht) im vorbestimmten Verhältnis;
(f) Erhitzen des Silicats auf 90 °C bis 100 °C während 2 bis 3 Stunden;
(g) Hinzufügen des erhitzten Silicats zu dem Gemisch und Rühren während 2 Stunden, so dass man ein Reaktionsgemisch erhält;
(h) Hinzufügen von kationischen Farbstoffen zu dem Reaktionsgemisch im vorbestimmten Verhältnis, so dass man ein kationisches Gemisch erhält;
(i) Rühren des kationischen Gemischs während 30 bis 60 Minuten bei 80 °C bis 90 °C;
(j) Inkubieren des kationischen Gemischs bei 85 ± 2 °C während 30 bis 60 Minuten;
(k) Filtrieren des kationischen Gemischs;
(I) Waschen des kationischen Gemischs; und
(m) Brennen des kationischen Gemischs, so dass man den Verbundstoff als Pulver erhält.

9. Teppich, Tuch, Wischer, Textilstoff, Kautschuk, Filter, Lack, Polyshield, Latex, Leim oder Kleber, der bzw. das den Verbundstoff gemäß Anspruch 1 bis 6 umfasst.

10. Polyurethan-Weichschaum, der den Verbundstoff gemäß Anspruch 1 bis 6 umfasst.

11. Polyurethan-Weichschaum gemäß Anspruch 10, der als Matratze oder Hygienematte geeignet ist.

12. Verfahren zur Herstellung des Polyurethan-Weichschaums gemäß Anspruch 10 oder 11, das das Herstellen eines Gemischs aus dem Verbundstoff und einem Polyurethan-Prepolymer oder -Bindemittel und das Polymerisieren des Gemischs umfasst.

13. Pharmazeutische, veterinärmedizinische, kosmetische oder antibakterielle Zusammensetzung, die den Verbundstoff gemäß Anspruch 1 bis 6 umfasst.

14. Verwendung des Verbundstoffs gemäß einem der Ansprüche 1 bis 6 zum Reduzieren oder Verhindern der Anhäufung von Bakterien und/oder Schimmelpilzen und/oder zum Reduzieren oder Verhindern von Fäulnis.

## Revendications

1. Matériau composite comprenant un support de microparticules se composant essentiellement de particules inorganiques polymériques ayant des ions métalliques et des cations non métalliques greffés à la surface du support, dans lequel, le rapport du pourcentage en poids de cation non métallique : ion métallique n'est pas plus petit que 1,0 : 20,0.

2. Matériau composite de la revendication 1, dans lequel les particules inorganiques sont un silicate poreux, de préférence une iolite ou une diatomite.

3. Matériau composite selon la revendication 1 ou 2, dans lequel
(I) l'ion métallique est un ion de la série de l'argent, est de préférence choisi parmi le cuivre, le zinc et l'argent, et/ou
(II) l'ion non métallique est un composé contenant un atome d'azote ayant au moins une charge positive, est de préférence un colorant cationique et de façon préférée entre toutes, est choisi parmi le Basic Green et le Cationic Brillant Blue.

4. Matériau composite selon l'une, quelconque des revendications 1 à 3, dans lequel l'ion métallique est un ion cuivre ou un ion zinc fixé à la surface d'un silicate microporeux.

5. Matériau composite selon l'une quelconque des revendications 1 à 4, dans lequel le rapport du pourcentage en poids du support de microparticules : ions métalliques : cations non métalliques est (20 à 40) : (1,0 à 2,0) : (0,1 à 0,3).

6. Matériau composite selon l'une quelconque des revendications 1 à 5, qui présente un diamètre de particules de 74 à 297 µm (200 à 50 mesh).

7. Procédé de production du matériau composite selon l'une quelconque des revendications 1 à 6, qui comprend le greffage d'un ion métallique et/ou du cation non métallique à la surface des particules inorganiques.

8. Procédé de la revendication 7 de préparation du matériau composite de la revendication 3, qui comprend les étapes de :
(a) préparation d'une quantité appropriée d'un sel métallique dans un rapport prédéterminé ;
(b) addition de 20 à 40 ml d'ammoniaque à 26-27 % à température ambiante ;
(c) mélange de l'ammoniaque avec le sel métallique pour obtenir un mélange liquide avec une concentration de 1 g dans 1000 à 1500 ml d'eau ;
(d) agitation du mélange pendant 30 à 60 minutes et mise à l'écart pour une utilisation ultérieure ;
(e) choix d'une quantité appropriée d'un silicate (diatomite ou iolite, la taille de particules correspondant à une valeur de maille de ≥ 80 mesh) au rapport prédéterminé ;
(f) chauffage du silicate à une température de 90°C à 100°C pendant 2 à 3 heures ;
(g) addition du silicate chauffé au mélange et agitation pendant 2 heures pour obtenir un mélange réactionnel ;
(h) addition des colorants cationiques au mélange réactionnel au rapport prédéterminé pour obtenir un mélange cationique ;
(i) agitation du mélange cationique pendant 30 à 60 minutes à une température de 80°C à 90°C ;
(j) incubation du mélange cationique à 85 ± 2°C pendant 30 à 60 minutes ;
(k) filtration du mélange cationique ;
(1) lavage du mélange cationique ; et
(m) cuisson du mélange cationique pour obtenir le composite sous la forme d'une poudre.

9. Tapis, vêtement, chiffon, étoffe, caoutchouc, filtre, peinture, Polyshield, latex, colle ou adhésif comprenant le composite des revendications 1 à 6.

10. Mousse souple de polyuréthane contenant le matériau composite des revendications 1 à 6.

11. Mousse souple de polyuréthane selon la revendication 10, qui est appropriée pour servir de matelas ou de mat hygiénique.

12. Procédé pour préparer la mousse souple de polyuréthane selon la revendication 10 ou 11, qui comprend la préparation d'un mélange à part du matériau composite et d'un prépolymère de polyuréthane ou d'un liant et la polymérisation du mélange.

13. Composition pharmaceutique, vétérinaire, cosmétique ou antibactérienne comprenant le composite des revendications 1 à 6.

14. Utilisation du matériau composite selon l'une quelconque des revendications 1 à 6, pour la réduction ou la prévention de l'accumulation de bactéries et/ou de moisissures et/ou pour la réduction ou la prévention de la putréfaction.
